# EUROPEAN PATENT SPECIFICATION

(11) **EP 1 188 366 B1**
(45) Date of publication and mention of the grant of the patent: **26.04.2006**
(21) Application number: 01203432.8
(22) Date of filing: 11.09.2001
(51) Int. Cl.: A01J 5/017

(54) **A construction for automatically milking animals**
Konstruktion zum automatischen Melken von Tieren
Installation de traite automatique d'animaux

(30) Priority: 15.09.2000 NL 1016194
(43) Date of publication of application: 20.03.2002
(73) Proprietor: Lely Enterprises AG, 6300 ZUG (CH)
(72) Inventor: Fransen, Renatus Ignatius Josephus, 3135 ZD Vlaardingen (NL)
(74) Representative: Corten, Maurice Jean F.M.

(56) References cited:
- EP-A- 0 635 203
- EP-A- 0 951 823
- FR-A- 2 298 943

## Description

The invention relates to a construction for automatically milking animals according to the preamble of claim 1.

Such a construction is known, see for example EP-A-0951823. In the known constructions there is often used a controllable robot arm, that is connected with a milk box, for positioning and/or connecting the teat cups. This has inter alia the disadvantage that for realizing the necessary three-dimensional movements a complex control for the robot arm is required. Further the animal to be milked is sometimes hindered by the robot arm.

The invention aims at improving such a construction. According to the invention this is achieved by the measures mentioned in the characterizing part of claim 1. The carrying element, which is supported (directly or indirectly) by the floor and movable across the floor surface, can be controlled in a simple manner and be designed as a compact one.

The invention will now be explained in further detail with reference to the accompanying figures.
Figure 1 is a schematic plan view of a construction according to the invention;
Figure 2 is a schematic side view of a part of the construction according to the arrow II in Figure 1, and
Figure 3 shows schematically a further embodiment of a part of the construction.

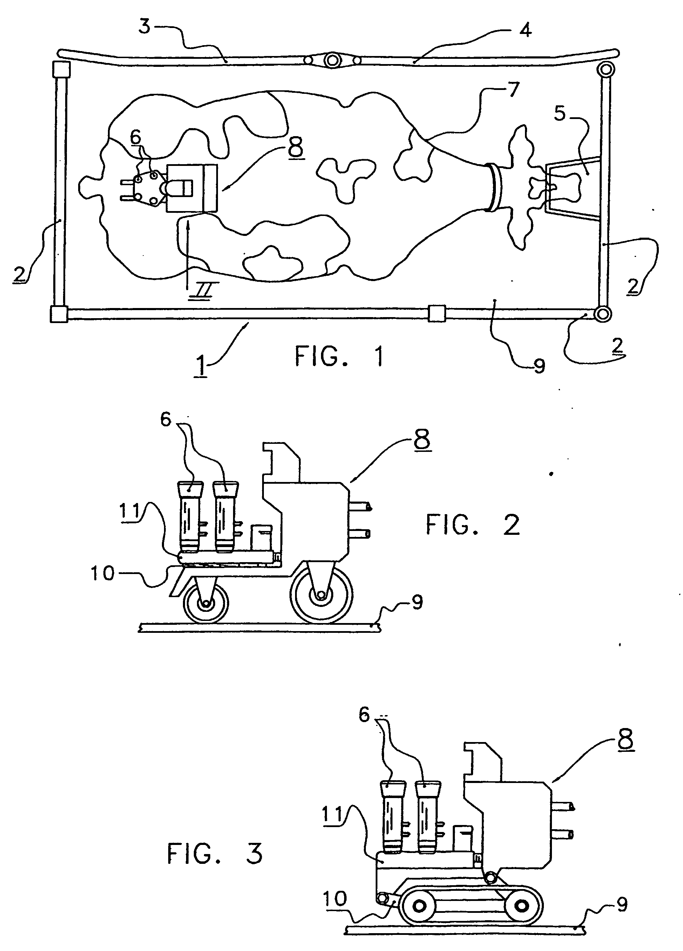

Figure 1 is a schematic plan view of a construction according to the invention. In this embodiment the construction for automatically milking animals comprises a milk box 1 provided with a fencing 2, an entrance gate 3, an exit gate 4 and a feeding trough 5. A milking robot is provided with (e.g. four) teat cups 6 and with means for connecting the teat cups 6 to the teats of an animal 7 to be milked (indicated by a dotted line).

The teat cups 6 are disposed on a carrying element 8 which is supported by the floor 9 of the milk box 1, provided with propulsion means and suitable for moving across a two-dimensional part of the floor surface 9 of the milk box 1. Hence, the carrying element 8 can be moved in two dimensions parallel to and across the floor 9 of the milk box 1. The milking robot is further provided with (non-shown) milk lines known per se, animal identification means and suitable control equipment, such as a computer.

The propulsion means comprise drive means such as a motor and steering means. The construction is further provided with means for positioning the carrying element 8 under the udder of the animal 7 to be milked in such a manner that the teat cups 6 can be connected to the teats of the animal 7 to be milked by means of an almost vertical movement. The means may comprise sensors known per se and a computer with suitable software. In this manner connection of the teat cups 6 is relatively simple. The movement of the teat cups 6 upon connection may also be a movement describing to a certain extent the arc of a circle. The carrying element 8 is suitable for moving from almost under the udder of the animal 7 to be milked to beyond the reach of the animal 7 to be milked and vice versa. For that purpose the carrying element 8 can move via a lateral side of the milk box 1 to outside the milk box 1 and vice versa.

In the embodiment shown in Figures 1 and 2 the carrying element 8 is provided with wheels, steering means and a motor. The means for connecting the teat cups 6 are preferably disposed substantially on the carrying element 8. This results in a compact construction. The means for connection comprise for example a lifting device 10 for the teat cups 6 and/or a rotatable and/or shiftable and/or pivotable platform 11 for the teat cups 6. The lifting device 10 may be suitable for connecting the teat cups 6 one by one or in pairs.

In the embodiment of Figure 3 the carrying element 8 is provided with wheels or rollers and caterpillar tracks as well as with steering means and is again suitable for being moved in a rolling manner in two dimensions across the floor 9 of the milk box 1. The carrying element 8 can be moved to just under the udder of the animal 7 to be milked and away therefrom, to beyond the reach of the animal 7 to be milked, for example to outside the milk box 1. A construction with a carrying element 8 according to Figure 3 can also be used without a milk box 1 being provided.

As an alternative for the embodiments shown provided with caterpillar tracks, wheels or rollers, the carrying element 8 may also be provided with an air cushion construction as well as with steering means and be suitable for being moved in two dimensions in a hovering manner across the ground or the floor 9 of the milk box 1. In that situation the carrying element 8 is still supported by the floor 9 (although without direct contact), but the friction occurring then is small.

In all embodiments the control of the carrying element 8 is relatively simple. The carrying element 8 may also be designed as a compact one, so that the animal 7 to be milked is almost not hindered thereby.

## Claims

1. A construction for automatically milking animals, said construction comprising a milk box (1) and a milking robot which is provided with at least one teat cup (6) and with means (10, 11) for connecting the teat cup(s) (6) to the teats of an animal (7) to be milked, **characterized in that** the teat cup(s) (6) is/are disposed on a carrying element (8) which is supported by the floor (9) of the milk box (1), provided with propulsion means and suitable for moving across a two-dimensional part of the floor surface (9) of the milk box (1).

2. A construction as claimed in claim 1, **characterized in that** the propulsion means comprise drive means and steering means.

3. A construction as claimed in claim 1 or 2, **characterized in that** the propulsion means comprise wheels, rollers, caterpillar tracks and/or an air cushion construction.

4. A construction as claimed in any one of claims 1 to 3, **characterized in that** the carrying element (8) is suitable for moving from almost under the udder of the animal (7) to be milked to beyond the reach of the animal (7) to be milked and vice versa.

5. A construction as claimed in claim 4, **characterized in that** the carrying element (8) is suitable for moving via a lateral side of the milk box (1) to outside the milk box (1) and vice versa.

6. A construction as claimed in any one of claims 1 to 5, **characterized in that** the drive means are provided with a motor.

7. A construction as claimed in any one of claims 1 to 6, **characterized in that** the means (10, 11) for connecting the teat cup(s) (6) are disposed substantially on the carrying element (8).

8. A construction as claimed in claim 7, **characterized in that** the carrying element (8) is provided with a lifting device (10) for the teat cup(s) (6).

9. A construction as claimed in any one of claims 7 and 8, **characterized in that** the carrying element (8) is provided with a rotatable and/or shiftable and/or pivotable platform (11) for the teat cup(s) (6).

10. A construction as claimed in any one of claims 8 and 9, **characterized in that** the lifting device (10) is suitable for connecting the teat cups (6) one by one or in pairs.

11. A construction as claimed in any one of claims 1 to 10, **characterized in that** the construction comprises means for positioning the carrying element (8) under the udder of the animal (7) to be milked in such a manner that the teat cup(s) (6) can be connected to the teats of the animal (7) to be milked by means of an almost vertical or arc-shaped movement.

## Patentansprüche

1. Vorrichtung zum automatischen Melken von Tieren, wobei die Vorrichtung eine Melkbox (1) und einen Melkroboter umfaßt, der mit mindestens einem Zitzenbecher (6) und mit Vorrichtungen (10, 11) zum Anschließen des/der Zitzenbecher(s) (6) an die Zitzen eines zu melkenden Tieres (7) versehen ist,
**dadurch gekennzeichnet, daß** der/die Zitzenbecher (6) an einem Trägerelement (8) angeordnet ist/sind, das auf dem Boden (9) der Melkbox (1) abgestützt, mit einer Fortbewegungsvorrichtung versehen und dazu ausgelegt ist, sich über einen zweidimensionalen Teil der Bodenoberfläche (9) der Melkbox (1) zu bewegen.

2. Vorrichtung nach Anspruch 1,
**dadurch gekennzeichnet, daß** die Fortbewegungsvorrichtung eine Antriebsvorrichtung und eine Lenkvorrichtung umfaßt.

3. Vorrichtung nach Anspruch 1 oder 2,
**dadurch gekennzeichnet, daß** die Fortbewegungsvorrichtung Räder, Rollen, Gleisketten und/oder eine Luftkissenkonstruktion umfaßt.

4. Vorrichtung nach einem der Ansprüche 1 bis 3,
**dadurch gekennzeichnet, daß** das Trägerelement (8) dazu ausgelegt ist, sich von annähernd unter dem Euter des zu melkenden Tieres (7) bis außerhalb der Reichweite des zu melkenden Tieres (7) und zurück zu bewegen.

5. Vorrichtung nach Anspruch 4,
**dadurch gekennzeichnet, daß** das Trägerelement (8) dazu ausgelegt ist, sich über eine Seitenkante der Melkbox (1) aus der Melkbox (1) heraus und zurück zu bewegen.

6. Vorrichtung nach einem der Ansprüche 1 bis 5,
**dadurch gekennzeichnet, daß** die Antriebsvorrichtung mit einem Motor versehen ist.

7. Vorrichtung nach einem der Ansprüche 1 bis 6,
**dadurch gekennzeichnet, daß** die Vorrichtungen (10, 11) zum Anschließen des/der Zitzenbecher(s) (6) im wesentlichen an dem Trägerelement (8) angeordnet sind.

8. Vorrichtung nach Anspruch 7,
**dadurch gekennzeichnet, daß** das Trägerelement (8) mit einer Hebevorrichtung (10) für den/die Zitzenbecher (6) versehen ist.

9. Vorrichtung nach einem der Ansprüche 7 und 8,
**dadurch gekennzeichnet, daß** das Trägerelement (8) mit einer drehbaren und/oder verschiebbaren und/oder schwenkbaren Plattform (11) für den/die Zitzenbecher (6) versehen ist.

10. Vorrichtung nach einem der Ansprüche 8 und 9,
**dadurch gekennzeichnet, daß** die Hebevorrichtung (10) geeignet ist, die Zitzenbecher (6) paarweise nacheinander anzuschließen.

11. Vorrichtung nach einem der Ansprüche 1 bis 10,
**dadurch gekennzeichnet, daß** die Vorrichtung eine Vorrichtung zum Positionieren des Trägerelements (8) unter dem Euter des zu melkenden Tieres (7) umfaßt, derart, daß der/die Zitzenbecher (6) durch eine annähernd vertikale oder bogenförmige Bewegung an die Zitzen des zu melkenden Tieres (7) angeschlossen werden kann/können.

## Revendications

1. Installation de traite automatique d'animaux, ladite installation comprenant un box de traite (1) et un robot de traite qui est muni d'au moins un gobelet trayeur (6) et de moyens (10, 11) destinés à relier le(s) gobelet(s) trayeur(s) (6) aux trayons d'un animal (7) qui doit être trait, **caractérisée en ce que** le(s) gobelet(s) trayeur(s) (6) est/sont disposé(s) sur un élément porteur (8) qui est supporté par le plancher (9) du box de traite (1), muni de moyens de propulsion et adapté pour se déplacer sur une partie en deux dimensions de la surface du plancher (9) du box de traite (1).

2. Installation selon la revendication 1, **caractérisée en ce que** les moyens de propulsion comprennent des moyens d'entraînement et des moyens de guidage.

3. Installation selon la revendication 1 ou 2, **caractérisée en ce que** les moyens de propulsion comprennent des roues, des rouleaux, des rails de chenille et/ou une installation formant coussin d'air.

4. Installation selon l'une quelconque des revendications 1 à 3, **caractérisée en ce que** l'élément porteur (8) est adapté pour se déplacer depuis un emplacement situé presque sous le pis de l'animal (7) qui doit être trait jusqu'à un emplacement situé au-delà de la portée de l'animal (7) qui doit être trait et vice versa.

5. Installation selon la revendication 4, **caractérisée en ce que** l'élément porteur (8) est adapté pour se déplacer via une face latérale du box de traite (1) vers l'extérieur du box de traite (1) et vice versa.

6. Installation selon l'une quelconque des revendications 1 à 5, **caractérisée en ce que** les moyens d'entraînement sont munis d'un moteur.

7. Installation selon l'une quelconque des revendications 1 à 6, **caractérisée en ce que** les moyens (10, 11) destinés à relier le(s) gobelet(s) trayeur(s) (6) sont disposés sensiblement sur l'élément porteur (8).

8. Installation selon la revendication 7, **caractérisée en ce que** l'élément porteur (8) est muni d'un dispositif de levage (10) pour le(s) gobelet(s) trayeur(s) (6).

9. Installation selon l'une quelconque des revendications 7 et 8, **caractérisée en ce que** l'élément porteur (8) est muni d'une plate-forme (11) pouvant tourner et/ou être déplacée et/ou pivoter pour le(s) gobelet (s) trayeur (s) (6).

10. Installation selon l'une quelconque des revendications 8 et 9, **caractérisée en ce que** le dispositif de levage (10) est adapté pour relier le(s) gobelet(s) trayeur(s) (6) un par un ou par paire.

11. Installation selon l'une quelconque des revendications 1 à 10, **caractérisée en ce que** l'installation comprend des moyens destinés à positionner l'élément porteur (8) sous le pis de l'animal (7) qui doit être trait de telle sorte que le(s) gobelet(s) trayeur(s) (6) puissent être reliés aux trayons de l'animal (7) qui doit être trait grâce à un mouvement presque vertical ou en forme d'arc.
